# EUROPÄISCHE PATENTSCHRIFT

(11) **EP 2 103 499 B1**
(45) Veröffentlichungstag und Bekanntmachung des Hinweises auf die Patenterteilung: **16.06.2010**
(21) Anmeldenummer: 09003914.0
(22) Anmeldetag: 18.03.2009
(51) Int. Cl.: B62B 3/00, B65D 19/06, B65D 19/10

(54) **Transportsicherungsanordnung für Container**
Transport safety assembly for container
Agencement de sécurité de transport pour conteneurs

(30) Priorität: 18.03.2008 DE 102008014740
(43) Veröffentlichungstag der Anmeldung: 23.09.2009
(73) Patentinhaber: Köllner, Martin, 85375 Neufahrn (DE)
(72) Erfinder: Köllner, Martin, 85375 Neufahrn (DE)
(74) Vertreter: Carstens, Dirk Wilhelm

(56) Entgegenhaltungen:
- EP-A- 0 661 222
- EP-A- 0 832 784
- DE-U1- 20 303 031
- GB-A- 2 008 064

## Beschreibung

Die vorliegende Erfindung bezieht sich auf eine Transportsicherungsanordnung für Container mit seitlichen Gitterwänden.

Oft werden Waren im Groß- und Einzelhandel auf Containern kommissioniert. Diese werden nach dem Beladen mit Waren mit so genannter Schweiß- oder Wickelfolie umwickelt, um die kommissionierte Ware während des Transportes zu sichern. Nach dem Transport wird die Folie aufgerissen oder aufgeschnitten und anschließend weggeworfen.

Durch diese Folienverpackung entsteht einerseits eine beträchtliche Müllmenge mit großem Volumen, andererseits wird viel Zeit zum Einwickeln und Auswickeln der Ware verwendet, wodurch auch beträchtliche Personalkosten entstehen. Weiterhin kann beim Aufschneiden der Folie die gesicherte Ware beschädigt werden.

Aus der DE 10 2007 003 529 B3 ist eine Transport- und Schutzvorrichtung für flächige Transportgüter bekannt, die eine Basisauflage mit mindestens einem daran befestigten Spanngurt und eine auf der Basisauflage aufgesetzte Ringwandung aufweist. Der Spanngurt sichert gleichzeitig ein Transportgut und die Ringwandung an der Basisauflage. Optional ist ein Deckelabschnitt vorgesehen, der zum Schutz des Transportgutes oben auf der Ringwandung gegenüberliegend zur Basisauflage mit dem Spanngurt gesichert werden kann.

Die Druckschrift DE 203 03 031 U1 offenbart eine Gitterbox zum Transport von explosivem Gefahrgut, insbesondere von Airbags, mit Gitterwänden und einem Gitterdeckel, der durch Halteteile an den Gitterwänden gesichert ist. Die Halteteile für den Gitterdeckel sind stabile Drahtbügel, welche im Falle einer Explosion des transportierten Gefahrgutes die Gitterbox geschlossen halten.

EP 0 661 222 A1 offenbart eine stapelbare Transportverpackung zum Transport von großen Haushaltsgeräten, z. B. Kühlschränken, die einen palettenartigen Bodenteil und einen ähnlichen palettenartigen Deckteil zum Anordnen jeweils oberhalb und unterhalb eines Haushaltsgerätes aufweist. Spanngurte verlaufen um den Bodenteil, den Deckteil und das dazwischen angeordnete Haushaltsgerät, um den Bodenteil und den Deckteil als Transportschutz für das Haushaltsgerät zu sichern. Optional können Stützen zwischen dem Bodenteil und dem Deckteil angeordnet werden, um eine Beschädigung des untersten Haushaltsgerätes bei großen Stapelhöhen zu vermeiden.

Es ist daher Aufgabe der vorliegenden Erfindung, ein kostengünstiges und leicht handzuhabendes Sicherungssystem für Waren auf Containern zu schaffen.

Diese Aufgabe wird durch eine Transportsicherungsanordnung für einen gegenüberliegende Gitterwände aufweisenden Container erreicht, die mindestens eine Seitenplatte zum Abdecken wenigstens einer offenen Seite des Containers aufweist. Die Seitenplatte ist mit mindestens zwei abnehmbaren elastischen Haltebändern an den Gitterwänden befestigt. So können die Waren durch eine leicht anzubringende und wiederverwendbare Seitenplatte gesichert werden, so dass eine Folienverpackung bzw. -sicherung mit den damit einhergehenden Nachteilen vermieden werden kann.

Vorzugsweise erstrecken sich die Haltebänder über eine Gitterwand hinweg und sind an ihren Enden mit jeweils einer Seitenplatte verbunden. Dadurch können die Seitenplatten schnell und einfach angebracht und entfernt werden.

Die Haltebänder weisen vorteilhafterweise sich über die Bandenden hinaus erstreckende elastische Endabschnitte auf, die eine Befestigungsanordnung zur Verbindung mit den Seitenplatten haben. So können mit einem Halteband an einer Gitterwand zwei Seitenplatten befestigt werden.

Die Haltebänder weisen vorzugsweise Haken zur Befestigung an den Gitterwänden auf. Die Haken sind schnell und an unterschiedlichen Stellen in die Stäbe der Gitterwände einzuhängen.

Um ein Verrutschen der Haltebänder und der Seitenwände nach oben und unten zu vermeiden, können die Haltebänder vorteilhafterweise an mindestens einer Stelle mindestens einmal um einen Gitterstab herumgewickelt sein.

Eine weitere vorteilhafte Möglichkeit zum Festlegen der Höhe der Haltebänder an den Gitterstäben besteht darin, dass die Haltebänder mindestens ein Sicherungsband zur Fixierung des Haltebandes an den Gitterwänden aufweisen.

Um eine einfache Handhabung zu ermöglichen, ist es vorteilhaft, dass das Sicherungsband einstückig mit mindestens einem Halteband ausgeführt ist.

Das Halteband, das Sicherungsband und die Endabschnitte sind vorzugsweise aus dem gleichen elastischen Material hergestellt. Dies vereinfacht die Herstellung und spart Kosten.

Die Seitenplatte ist vorzugsweise mit mindestens einem Verschlussband an der gegenüberliegenden Gitterwand gesichert. Dadurch wird die Seitenplatte zwischen den Gitterwänden eingespannt, um sie zur Sicherung der transportierten Waren zueinander hin zu ziehen.

Die Verschlussbänder weisen vorteilhafterweise an einem Ende einen Haken zur Verbindung mit den Gitterwänden und am anderen Ende eine Befestigungsanordnung zur Befestigung an den Seitenplatten auf. Dadurch kann die Seitenplatte mit der anderen Gitterwand verbunden bleiben und durch Verschlussbänder geschlossen gehalten werden.

Die Befestigungsanordnung der Haltebänder und/oder der Verschlussbänder weist vorzugsweise ein Loch in der Endabschnitt, einen Mittelteil und ein starres Sperrelement zum Bilden einer Schlaufenbefestigung auf. Auf diese Weise sind Teile der Transportsicherungsanordnung jederzeit austauschbar.

Vorzugsweise sind die Seitenplatten in ihrer Höhe und in ihrer Breite kleiner als die freien Seiten des Containers. Dadurch können sich die Gitterwände etwas zueinander hin und voneinander weg bewegen, um sich an die Abmessungen der transportierten Waren anzupassen.

Die Seitenplatte ist vorteilhafterweise mit Löchern zur Befestigung der Verschluss- und Haltebänder versehen. Dadurch ist eine einfache Verbindung mit den Halte- und Verschlussbändern möglich.

Die Seitenplatte besteht vorzugsweise aus einem Polymer-Material und/oder einer Sandwich-Konstruktion. Dadurch wird Gewicht eingespart und die Handhabung sowie die Säuberung der Seitenplatte werden erleichtert.

Vorteilhafterweise ist eine Deckelplatte zur Abdeckung des Containers mit Halte- und/oder Verschlussbändern an den Gitterwänden befestigt. Dadurch kann die Ware gegen Einwirkungen von oben, beispielsweise gegen Witterungseinfluss, geschützt werden.

Es zeigen:
- Fig. 1: eine perspektivische Ansicht eines Containers mit einer daran angeordneten Transportsicherungsanordnung gemäß der vorliegenden Erfindung;
- Fig. 2: eine Darstellung eines Haltebandes der in Fig. 1 gezeigten Transportsicherungsanordnung;
- Fig. 3: eine Darstellung eines Verschlussbandes der in Fig. 1 dargestellten Transportsicherungsanordnung;
- Fig. 4: eine vergrößerte Ansicht eines Endabschnittes eines Verschluss- oder Haltebandes.

In der folgenden Beschreibung beziehen sich die Ausdrücke "oben", "unten", "rechts", "links", "hinten" und "vorne" sowie entsprechende Ausdrücke auf die in den Figuren gezeigten Anordnungen. Es sei bemerkt, dass dies nur zur leichteren Erklärung dient und nicht einschränkend verstanden werden soll.

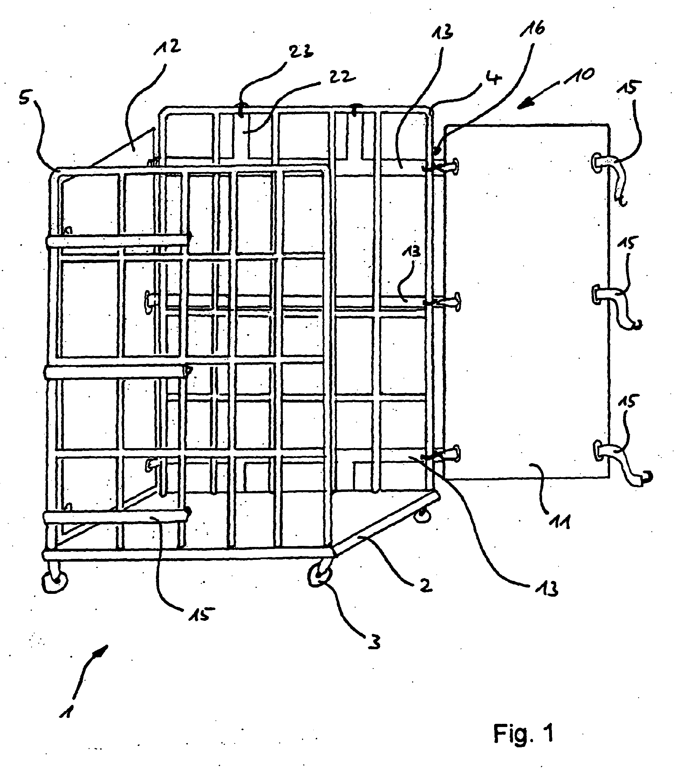

Fig.1 zeigt einen Container 1, der aus einer Basis 2, Rädern 3 sowie zwei Gitterwänden 4, 5 besteht. An dem Container 1 ist eine Transportsicherungsanordnung 10 gemäß der vorliegenden Erfindung angebracht. Die Transportsicherungsanordnung 10 weist zwei Seitenplatten 11, 12, drei Haltebänder 13 und sechs Verschlussbänder 15 auf.

In den Figuren sind drei Haltebänder 13 und jeweils drei Verschlussbänder 15 gezeigt, die mit den jeweiligen Seitenplatten 11, 12 verbunden sind. Es sei jedoch bemerkt, dass auch eine andere Anzahl von Halte- und Verschlussbändern 13, 15 vorgesehen sein kann, beispielsweise nur zwei oder auch mehr als drei Halte- und Verschlussbänder 13, 15. Weiterhin sei bemerkt, dass nicht die gleiche Anzahl von Halte- und Verschlussbändern 13, 15 vorgesehen sein muss. Beispielsweise können für eine Seitenplatte 11 oder 12 drei Haltebänder vorgesehen sein, während gleichzeitig zwei oder vier Verschlussbänder an der gegenüberliegenden Kante der jeweiligen Seitenplatte 11, 12 angeordnet sein können.

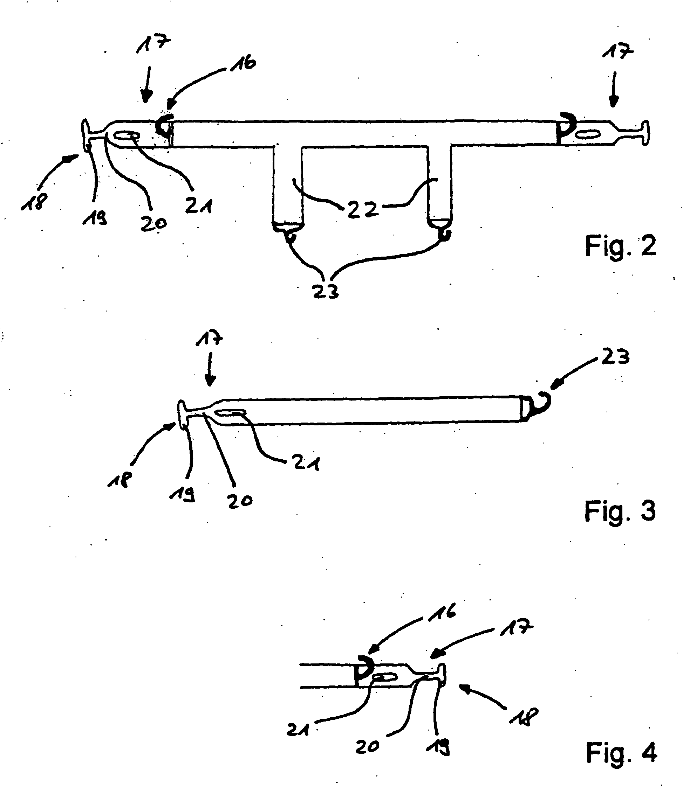

Fig. 2 ist eine detaillierte Darstellung eines Haltebandes 13. Das Halteband 13 weist zwei Haltebefestigungen 16 auf, die von einander um eine freie Länge entfernt sind. Im gezeigten Ausführungsbeispiel sind die Haltebefestigungen 16 als Haken 16 ausgeführt und werden in der weiteren Beschreibung als Haken 16 bezeichnet. Das Halteband 13 besteht aus einem elastischen Material, und die freie Länge zwischen den Haken 16 ist etwas kleiner als die Breite einer Gitterwand 4, 5. Die Haken 16 haben eine Größe, die an den Gitterdurchmesser der Gitterwände 4, 5 angepasst ist, so dass die beiden gegenüberliegenden Haken 16 eines Haltebandes 13 an den Stäben der Gitterwand 4 unter Spannung eingehängt werden können.

Alternativ können die Haltebefestigungen 16 auch in anderer Weise ausgeführt sein, wie beispielsweise als Schnallen oder Klemmen, welche die Gitterstäbe umfassen. Bei dieser Alternative könnte das Halteband 13 auch ganz oder teilweise aus einem nicht elastischen Material oder aus sogar aus einem starren Material sein, beispielsweise aus einem Blechstreifen.

Das Halteband 13 weist weiter einen elastischen Endabschnitt 17 mit einer Befestigungsanordnung 18 am freien Ende auf. Die Befestigungsanordnung 18 besteht im gezeigten Ausführungsbeispiel aus einem am äußeren Ende des Endabschnittes 17 angebrachten Sperrelement 19, aus einem Mittelteil 20 und einem Loch 21. Die Endabschnitt 17 und die Befestigungsanordnung 18 sind vorzugsweise aus einem elastischen Polymer-Material hergestellt. Das Sperrelement 19 ist in den Fig. als eine mit Polymer-Material umgossene Stange gezeigt.

An einem oder mehreren der Haltebänder 13 ist mindestens ein Sicherungsband 22 vorgesehen. Die Sicherungsbänder 22 sind am einen Ende mit dem Halteband 13 verbunden, und sie sind am anderen Ende mit einem Haken 23 versehen, der ebenso wie die Hakten 16 an die Größe der Gitterstäbe angepasst ist.

Fig. 3 zeigt ein Verschlussband 15 im Detail. Das Verschlussband 15 weist am einen Ende einen Endabschnitt 17 mit Verbindungsmitteln 18 auf, die genauso aufgebaut sind, wie die Verbindungsmittel 18 des Haltebands 13. Die Verbindungsmittel 18 des Verschlussbandes 15 bestehen ebenfalls aus einem Sperrelement 19, einem Mittelteil 20 und einem Loch 21. Am anderen Ende des Verschlussbandes 15 ist ein Haken 23 vorgesehen, der an die Gitterstärke der Gitterwände 4, 5 angepasst ist und in die Gitterstäbe eingehängt werden kann.

Die Seitenplatten 11, 12 bestehen vorzugsweise aus einem Polymer-Material. Die Seitenplatten 11, 12 weisen Befestigungslöcher 30 auf, die an den Längskanten parallel zu den Gitterwänden 4, 5 angeordnet sind (siehe Fig. 1). Die Befestigungslöcher 30 sind vorzugsweise als Langloch ausgeführt und haben eine Höhen- und Breitenabmessung, die der Breite und Dicke der Haltebänder 13 und der Verschlussbänder 15 entsprechen. Weiterhin können die Seitenplatten 11, 12 auf der ganzen Fläche perforiert sein, um Gewicht zu sparen und/oder eine Belüftung der Waren im Container 1 zu ermöglichen.

Die Breite der Seitenplatten 11, 12 ist kleiner als die Breite der Basis 2 des Containers 1, und ist vorzugsweise zwischen 70 und 90% der Breite der Basis 2 des Containers 1. Genauso ist die Höhe der Seitenplatten 11, 12 kleiner als die Höhe der seitlichen Gitterwände 4, 5 und ist vorzugsweise zwischen 70 und 90% der Höhe der seitlichen Gitterwände 4. Auf diese Weise ist ein gewisser Abstand zwischen den Seitenplatten 11, 12 und den Gitterwänden 4, 5 sowie der Basis 2 vorhanden. Je nach Größe der gelagerten Waren können nämlich die Gitterwände 4, 5 etwas zueinander hin oder weg voneinander gebogen sein, um die Waren auf dem Container 1 zu halten.

Das Material der Seitenplatten 11, 12 ist vorzugsweise ein Sandwich-Material, das aus zwei Deckschichten und dazwischen angeordneten Versteifungen besteht. Dadurch kann Gewicht eingespart werden und die Handhabung der Seitenplatten 11, 12 erleichtert werden.

Zur Befestigung der Transportsicherungsanordnung 10 an dem Container 1 werden zunächst die Haltebänder 13 ungefähr auf der Höhe der jeweiligen Befestigungslöcher 30 der Seitenplatten 11, 12 an einer der Gitterwände 4, 5 angebracht (hier an der Gitterwand 4). Dazu werden die Haken 16 in die Gitterwand 4 eingehängt. Da die freie Länge zwischen den Haken 16 etwas kleiner als die Breite der Gitterwand 4 ausgeführt ist, wird das jeweilige Halteband gespannt, sobald die Haken 16 eingehängt sind.

Bei dem in Fig. 1 gezeigten Ausführungsbeispiel sind an den oberen Haltebändern 13 jeweils zwei Sicherungsbänder 22 angebracht. Die Sicherungsbänder 22 können integral mit den Haltebändern 13 ausgeführt sein oder können nachträglich an diesen befestigt werden. Die Haken 23 am freien Ende der Sicherungsbänder 22 werden ebenfalls in die Stäben der Gitterwand 4 oder an der Basisplatte 2 des Containers 1 eingehängt. Die Sicherungsbänder 22 sind zum Halten einiger oder aller Haltebänder 13 gegen ein Verrutschen nach oben und unten vorgesehen.

Als eine Alternative könnten die Sicherungsbänder 22 auch weggelassen werden. Eine Sicherung von einem oder mehreren der Haltebänder 13 gegen ein Verrutschen nach oben oder unten wird bei dieser Ausführung dadurch vorgesehen, dass der Endabschnitt 17 der Haltebänder 13 etwas länger ausgeführt ist, so dass der elastische Endabschnitt 17 nach dem Einhängen der Haken 16 noch einmal um die äußeren Gitterstäbe der Gitterwand 4 herumgewickelt werden kann. Dadurch wird eine Reibung zwischen dem Elastomer-Material des Haltebandes 13 bzw. des Endabschnittes 17 und den Gitterstäben vorgesehen, die ein Verrutschen der Haltebänder 13 verhindert.

Alternativ könnte die freie Länge des Haltebandes zwischen den Haken 16 etwas länger ausgeführt werden, so dass der Mittelteil des Haltebandes 13 um einen oder mehrere Gitterstäbe der Gitterwand 4 gewickelt werden kann, um so das Halteband 13 durch Reibung gegen ein Verrutschen zu sichern.

Um die Seitenplatten 11, 12 mit den Haltebändern 13 zu verbinden, werden die Endabschnitte 17 durch die Befestigungslöcher 30 hindurchgeführt. Dann wird das Sperrelement 19 der Verbindungsmittel 18 durch das Loch 21 hindurchgeführt und nach dem Hindurchführen quergestellt. So wird eine Schlaufe gebildet, und die jeweilige Seitenplatte 11 oder 12 ist am Ende der Endabschnitt 17 befestigt.

Die Endabschnitte 17 der Verschlussbänder 15 werden in der gleichen Weise durch gegenüberliegende Befestigungslöcher 30 der Seitenplatten 11, 12 hindurchgeführt und das Sperrelement 19 wird durch das entsprechende Loch 21 geführt, um eine Schlaufe zu bilden.

Andere Befestigungsmöglichkeiten, wie beispielsweise Clips oder Schnallen, sind zur Befestigung der Seitenplatten 11, 12 an den Haltebändern 13 oder an den Verschlussbändern 15 ebenfalls denkbar. Die oben beschriebene Befestigung durch die Verbindungsmittel 18 mit der Sperrelement 19, dem Mittelteil 20 und dem Loch 21, die zu einer Schlaufe geformt werden, wird jedoch bevorzugt, da sie einfach, schnell und ohne Werkzeug am Einsatzort des Containers montiert werden kann.

Im Einsatz wird der Container 1 mit Waren befüllt, während die Seitenplatten 11 und/oder 12 geöffnet und weggeklappt sind. Die Endabschnitte 17 der Haltebänder 13, dienen dabei als Scharnier, während die Verschlussbänder 15 von der anderen Seite der Seitenplatten 11, 12 herunter hängen (Fig. 1). Nach dem Ende des Befüllungsvorgangs werden die Seitenplatten 11, 12 geschlossen und die Haken 23 der Verschlussbänder 15 werden in passende Gitterstäbe der Gitterwand 5 eingehängt. Die Haltebänder 13 und die Verschlussbänder 15 werden dabei unter Spannung gesetzt und ziehen die Gitterwände 4, 5 etwas zu einander hin, wodurch die Waren im Container 1 festgehalten werden.

Zum Entladen werden die Haken 23 der Verschlussbänder 15 ausgehängt, die Seitenplatten 11, 12 werden weggeklappt, und es kann ein schneller Zugriff auf die Waren erfolgen. Nachdem der Container 1 geleert ist, können die Seitenplatten 11, 12 in eine Stellung parallel zur Gitterwand 4 nach vorne oder nach hinten geklappt werden und können dann durch die Verschlussbänder 15 in dieser Ruheposition gesichert werden.

Zur Einsparung von Lagerraum werden die Container 1 üblicherweise in einander gestapelt. D.h. ein Container 1 wird umgedreht, so dass die Gitterwände 4, 5 nach unten zeigen, und er wird dann auf einen anderen Container 1 gestellt. Um eine bessere Stapelbarkeit zu gewährleisten, können die Seitenplatten 11, 12 dabei abwechselnd nach innen oder nach außen geklappt werden.

Die Erfindung wurde zuvor anhand bevorzugter Ausführungsbeispiele beschrieben. Dem Fachmann sind jedoch zahlreiche Abwandlungen und Ausgestaltungen möglich, ohne dass dadurch der Erfindungsgedanke verlassen wird.

## Patentansprüche

1. Transportsicherungsanordnung (10) für einen gegenüberliegende Gitterwände (4, 5) aufweisenden Container (1) **gekennzeichnet durch** mindestens eine Seitenplatte (11, 12) zum Abdecken wenigstens einer offenen Seite des Containers (1), die mit mindestens zwei abnehmbaren elastischen Haltebändern (13) an den Gitterwänden (4, 5) befestigt ist.

2. Transportsicherungsanordnung (10) nach Anspruch 1, **dadurch gekennzeichnet, dass** sich die Haltebänder (13) über eine Gitterwand (4, 5) hinweg erstrecken und an ihren Enden mit jeweils einer Seitenplatte (11, 12) verbunden sind.

3. Transportsicherungsanordnung (10) nach einem der vorhergehenden Ansprüche, **dadurch gekennzeichnet, dass** die Haltebänder (13) sich über die Bandenden hinaus erstreckende elastische Endabschnitte (17) aufweisen, die eine Befestigungsanordnung (18) zur Verbindung mit den Seitenplatten (11, 12) haben.

4. Transportsicherungsanordnung (10) nach einem der vorhergehenden Ansprüche, **dadurch gekennzeichnet, dass** die Haltebänder (13) Haken (23) zur Befestigung an den Gitterwänden (4, 5) aufweisen.

5. Transportsicherungsanordnung (10) nach einem der vorhergehenden Ansprüche, **dadurch gekennzeichnet, dass** die Haltebänder (13) an mindestens einer Stelle mindestens einmal um einen Gitterstab herumgewickelt sind.

6. Transportsicherungsanordnung (10) nach einem der vorhergehenden Ansprüche, **dadurch gekennzeichnet, dass** die Haltebänder (13) mindestens ein Sicherungsband (22) zur Fixierung des Haltebandes (13) an den Gitterwänden (4, 5) aufweisen.

7. Transportsicherungsanordnung (10) nach Anspruch 6, **dadurch gekennzeichnet, dass** das Sicherungsband (22) einstückig mit mindestens einem Halteband (13) ausgeführt ist.

8. Transportsicherungsanordnung (10) nach einem der vorhergehenden Ansprüche, **dadurch gekennzeichnet, dass** das Halteband (13), das Sicherungsband (22) und die Endabschnitte (17) aus dem gleichen elastischen Material gemacht sind.

9. Transportsicherungsanordnung (10) nach einem der vorhergehenden Ansprüche, **dadurch gekennzeichnet, dass** die Seitenplatte (11, 12) mit mindestens einem Verschlussband (15) an der gegenüberliegenden Gitterwand (5) gesichert ist.

10. Transportsicherungsanordnung (10) nach Anspruch 9, **dadurch gekennzeichnet, dass** die Verschlussbänder (15) an einem Ende einen Haken (23) zur Verbindung mit der Gitterwand (5) und am anderen Ende eine Befestigungsanordnung (18) zur Befestigung an den Seitenplatten (11, 12) aufweisen.

11. Transportsicherungsanordnung (10) nach einem der vorhergehenden Ansprüche, **dadurch gekennzeichnet, dass** die Befestigungsanordnung (18) der Haltebänder (13) und/oder der Verschlussbänder (15) ein Loch (21) im Endabschnitt (17), einen Mittelteil (20) und ein starres Sperrelement (19) zum Bilden einer Schlaufenbefestigung aufweist.

12. Transportsicherungsanordnung (10) nach einem der vorhergehenden Ansprüche, **dadurch gekennzeichnet, dass** die Seitenplatten (11, 12) in ihrer Höhe und in ihrer Breite kleiner als die freien Seiten des Containers (1) sind.

13. Transportsicherungsanordnung (10) nach einem der vorhergehenden Ansprüche, **dadurch gekennzeichnet, dass** die Seitenplatte (11, 12) mit Löchern zur Befestigung der Verschluss- und Haltebänder (15, 13) versehen ist.

14. Transportsicherungsanordnung (10) nach einem der vorhergehenden Ansprüche, **dadurch gekennzeichnet, dass** die Seitenplatte (11, 12) aus einem Polymer-Material besteht und/oder eine Sandwich-Konstruktion aufweist.

15. Transportsicherungsanordnung (10) nach einem der vorhergehenden Ansprüche, **dadurch gekennzeichnet, dass** eine Deckelplatte zur Abdeckung des Containers (1) nach oben mit Halte- und/oder Verschlussbändern (13, 15) an den Gitterwänden (4, 5) befestigt ist.

## Claims

1. Shipping protection arrangement (10) for a container (1) comprising opposing grid walls (4, 5) **characterized by** at least one side plate (11, 12) for covering at least one open side of the container (1), said at least one side plate (11, 12) being fixed to said grid walls (4, 5) by at least two detachable elastic retaining straps (13).

2. Shipping protection arrangement (10) according to claim 1, **characterized in that** said retaining straps (13) extend over one of said grid walls (4, 5) and being connected to one of said side plates (11, 12), respectively, at their ends.

3. Shipping protection arrangement (10) according to one of the preceding claims **characterized in that** said retaining straps (13) comprise elastic end portions (17) extending beyond the strap ends thereof, said end portions (17) having a fixing arrangement (18) for connecting to said side plates (11, 12).

4. Shipping protection arrangement (10) according to one of the preceding claims, **characterized in that** said retaining straps (13) comprise hooks (23) for connection to the grid walls (4, 5).

5. Shipping protection arrangement (10) according to one of the preceding claims, **characterized in that** said retaining straps (13) are guided around a grid bar at least once at at least one position.

6. Shipping protection arrangement (10) according to one of the preceding claims **characterized in that** said retaining straps (13) comprise at least one fixing strap (22) for fixing said retaining strap (13) to one of said grid walls (4, 5).

7. Shipping protection arrangement (10) according to claim 6, **characterized in that** said fixing strap (22) is integrally formed with at least one retaining strap (13).

8. Shipping protection arrangement (10) according to one of the preceding claims, **characterized in that** said retaining strap (13), said fixing strap (22) and said end portions (17) are manufactured from the same elastic material.

9. Shipping protection arrangement (10) according to one of the preceding claims, **characterized in that** said side plate (11, 12) is fixed to the opposing grid wall (5) by at least one closing strap (15).

10. Shipping protection arrangement (10) according to claim 9, **characterized in that** said closing straps (15) comprise a hook (23) for connection to said grid wall (5) on one end thereof and said closing straps (15) comprise a fixing arrangement (18) for connection to said side plates (11, 12) on the other end thereof.

11. Shipping protection arrangement (10) according to one of the preceding claims, **characterized in that** said fixing arrangement (18) of said retaining straps (13) and/or of said closing straps (15) comprise a hole (21) located in the end portion (17) thereof, a middle portion (20) and a rigid locking element (19) forming a loop fixation.

12. Shipping protection arrangement (10) according to one of the preceding claims, **characterized in that** the height and width of said side plates (11, 12) being smaller than the open sides of said container (1).

13. Shipping protection arrangement (10) according to one of the preceding claims, **characterized in that** said side plate (11, 12) comprises holes for fixing said closing straps (15) and said retaining straps (13).

14. Shipping protection arrangement (10) according to one of the preceding claims, **characterized in that** said side plate (11, 12) comprises a polymer material and/or a sandwich structure.

15. Shipping protection arrangement (10) according to one of the preceding claims, **characterized in that** a cover plate for covering said container (1) on the top is fixed to said grid walls (4, 5) by retaining straps (13) and/or by closing straps (15).

## Revendications

1. Agencement de protection pour transport (10) pour un conteneur (1) comprenant des parois grillagées (4, 5) opposées, **caractérisé par** au moins une plaque latérale (11, 12) pour couvrir au moins un côté ouvert du conteneur (1), ladite au moins une plaque latérale (11, 12) étant fixée aux parois grillagées (4, 5) par au moins deux sangles de maintien élastiques détachables (13).

2. Agencement de protection pour transport (10) selon la revendication 1, **caractérisé en ce que** les sangles de maintien (13) s'étendent sur une des parois grillagées (4, 5) et sont connectées à l'une des parois latérales (11, 12) respectivement au niveau de leurs extrémités.

3. Agencement de protection pour transport (10) selon l'une quelconque des revendications précédentes, **caractérisé en ce que** les sangles de maintien (13) comprennent des parties d'extrémités élastiques (17) s'étendant au-delà des extrémités de sangle, lesdites parties d'extrémités (17) comportant un agencement de fixation (18) pour la connexion aux parois latérales (11, 12).

4. Agencement de protection pour transport (10) selon l'une quelconque des revendications précédentes, **caractérisé en ce que** les sangles de maintien (13) comprennent des crochets (23) pour la connexion aux parois grillagées (4, 5).

5. Agencement de protection pour transport (10) selon l'une quelconque des revendications précédentes, **caractérisé en ce que** les sangles de maintien (13) sont guidées autour d'un élément grille pendant au moins un certain temps au niveau d'au moins une position.

6. Agencement de protection pour transport (10) selon l'une quelconque des revendications précédentes, **caractérisé en ce que** les sangles de maintien (13) comprennent au moins une sangle de fixation (22) pour fixer la sangle de maintien (13) à l'une des parois grillagées (4, 5).

7. Agencement de protection pour transport (10) selon la revendication 6, **caractérisé en ce que** la sangle de fixation (22) est formée d'une seule pièce avec au moins une sangle de maintien (13).

8. Agencement de protection pour transport (10) selon l'une quelconque des revendications précédentes, **caractérisé en ce que** la sangle de maintien (13), la sangle de fixation (22) et les parties d'extrémités (17) sont fabriquées avec le même matériau élastique.

9. Agencement de protection pour transport (10) selon l'une quelconque des revendications précédentes, **caractérisé en ce que** la plaque latérale (11, 12) est fixée à la paroi grillagée (5) opposée par au moins une sangle de fermeture.

10. Agencement de protection pour transport (10) selon la revendication 9, **caractérisé en ce que** les sangles de fermeture (15) comprennent à une extrémité un crochet (23) pour une connexion à la paroi grillagée (5) et les sangles de fermeture (15) comprennent à leur autre extrémité un agencement de fixation (18) pour connexion aux plaques latérales (11, 12).

11. Agencement de protection pour transport (10) selon l'une quelconque des revendications précédentes, **caractérisé en ce que** l'agencement de fixation (18) des sangles de maintien (13) et/ou des sangles de fermeture (15) comprend un trou (21) situé dans sa partie d'extrémité (17), une partie centrale (20) et un élément de verrouillage rigide (19) formant une fixation de boucle.

12. Agencement de protection pour transport (10) selon l'une quelconque des revendications précédentes, **caractérisé en ce que** la hauteur et la largeur des plaques latérales (11, 12) sont plus petites que le côté ouvert du conteneur (1).

13. Agencement de protection pour transport (10) selon l'une quelconque des revendications précédentes, **caractérisé en ce que** la plaque latérale (11, 12) comprend des trous pour la fixation des sangles de fermeture (15) et des sangles de maintien (13).

14. Agencement de protection pour transport (10) selon l'une quelconque des revendications précédentes, **caractérisé en ce que** la plaque latérale (11, 12) comprend un matériau polymère et/ou une structure en sandwich.

15. Agencement de protection pour transport (10) selon l'une quelconque des revendications précédentes, **caractérisé en ce qu'**une plaque de couverture destinée à couvrir le conteneur
(1) sur le haut est fixée aux parois grillagées (4, 5) par des sangles de maintien (13) et/ou des sangles de fermeture (15).
